# EUROPEAN PATENT APPLICATION

(11) **EP 4 300 300 A1**
(43) Date of publication of application: **03.01.2024**
(21) Application number: 21928252.2
(22) Date of filing: 28.12.2021
(51) Int. Cl.: G06F 9/455, G06F 9/451, G06F 15/78, B60R 16/023

(54) **SIGNAL PROCESSING DEVICE AND DISPLAY APPARATUS FOR VEHICLE COMPRISING SAME**

(30) Priority: 26.02.2021 KR 20210026453; 23.04.2021 KR 20210053004
(71) Applicant: LG Electronics Inc., Yeongdeungpo-gu Seoul 07336 (KR)
(72) Inventor: HAN, Dongwoo, Seoul 06772 (KR); PARK, Namyong, Seoul 06772 (KR); LEE, Dongkyu, Seoul 06772 (KR); SHIN, Kyungjun, Seoul 06772 (KR); YOON, Jaegu, Seoul 06772 (KR); JUNG, Dukyung, Seoul 06772 (KR)
(74) Representative: Vossius & Partner Patentanwälte Rechtsanwälte mbB
(86) International application number: PCT/KR2021/020056
(87) International publication number: WO 2022/181960

(57) **Abstract**

A signal processing device and a display apparatus for vehicle including the same are disclosed. The signal processing device includes a processor configured to perform signal processing for a display located in a vehicle, wherein the processor executes first to third virtual machines on a hypervisor in the processor, the second virtual machine is operated for a first display, the third virtual machine is operated for a second display, and the first virtual machine in the processor includes a first interface configured to receive sensor data from a sensor device in the vehicle and a radio signal from a tuner in the vehicle and an input and output server interface configured to transmit data corresponding to the sensor data or the radio signal received from the first interface to at least one of the second virtual machine or the third virtual machine.

## Description

### Technical field of the invention

The present disclosure relates to a signal processing device and a display apparatus for vehicle including the same, and more particularly to a signal processing device capable of rapidly receiving and processing sensor data and a display apparatus for vehicle including the same.

### Background technology

A vehicle is an apparatus that a driver moves in a desired direction. A representative example of the vehicle is a car.

Meanwhile, a display apparatus for vehicle is located in the vehicle for convenience of users who use the vehicle.

For example, a display is disposed in a cluster in order to display various kinds of information. Meanwhile, in order to display vehicle driving information, various displays, such as an audio video navigation (AVN) display, are located in the vehicle, in addition to the cluster.

In the case in which the number of displays in the display apparatus for vehicle is increased, however, signal processing for the displays is complicated.

Meanwhile, Korean Patent Application Publication No. 10-2015-0142298 (hereinafter referred to as a prior art document) discloses a vehicle, a vehicle control method, and a vehicle driving sound control apparatus.

According this prior art document, there are demerits in that, in response to when various devices in a vehicle transmitting data to a controller, considerable transmission time is taken and device-specific synchronization is very difficult.

### Detailed description of the invention

### Technical objectives

An object of the present disclosure is to provide a signal processing device capable of rapidly receiving and processing sensor data and a display apparatus for vehicle including the same.

Another object of the present disclosure is to provide a signal processing device capable of rapidly sharing sensor data even though the number of virtual machines is increased or the number of displays is increased and a display apparatus for vehicle including the same.

Another object of the present disclosure is to provide a signal processing device capable of rapidly and accurately processing touch input and a display apparatus for vehicle including the same.

Another object of the present disclosure is to provide a signal processing device capable of rapidly and accurately processing touch input even though the number of virtual machines is increased and a display apparatus for vehicle including the same.

A further object of the present disclosure is to provide a signal processing device capable of rapidly and accurately processing touch input even though operating systems of a plurality of virtual machines are different from each other and a display apparatus for vehicle including the same.

### Technical solutions

In accordance with an aspect of the present disclosure, the above and other objects can be accomplished by the provision of a signal processing device including a processor configured to perform signal processing for a display located in a vehicle, wherein the processor executes first to third virtual machines on a hypervisor in the processor, the second virtual machine is operated for a first display, the third virtual machine is operated for a second display, and the first virtual machine in the processor includes a first interface configured to receive sensor data from a sensor device in the vehicle and a radio signal from a tuner in the vehicle and an input and output server interface configured to transmit data corresponding to the sensor data or the radio signal received from the first interface to at least one of the second virtual machine or the third virtual machine, and a display apparatus for vehicle including the same.

Meanwhile, the second virtual machine and the third virtual machine may include input and output client interfaces configured to receive the data corresponding to the sensor data or the radio signal from the first interface in the first virtual machine.

Meanwhile, the second virtual machine and the third virtual machine may not perform data communication with the sensor device in the vehicle and the tuner in the vehicle.

Meanwhile, the first virtual machine may be configured to store the data corresponding to the sensor data or the radio signal in a shared memory, and at least one of the second virtual machine or the third virtual machine may receive the data corresponding to the sensor data or the radio signal stored in the shared memory.

Meanwhile, the first virtual machine may transmit a buffer index regarding the shared memory, in which the data corresponding to the sensor data or the radio signal are stored, to the second virtual machine or the third virtual machine, and the second virtual machine or the third virtual machine may read the data corresponding to the sensor data or the radio signal stored in the shared memory based on the received buffer index.

Meanwhile, the first virtual machine may receive and process wheel speed sensor data of the vehicle through the first interface, and may transmit the processed wheel speed sensor data or speed information corresponding to the processed wheel speed sensor data to at least one of the second virtual machine or the third virtual machine through the input and output server interface.

Meanwhile, the first virtual machine may receive and process air conditioning data of the vehicle through the first interface, and may transmit the processed air conditioning data or in-vehicle temperature information corresponding to the processed air conditioning data to at least one of the second virtual machine or the third virtual machine through the input and output server interface.

Meanwhile, the first virtual machine may perform a supervisory service for system and display management and a system service for external device connection control and vehicle information management.

Meanwhile, the sensor data from the sensor device in the vehicle may be received based on CAN communication, and the first interface in the first virtual machine in the processor may further receive USB data or Bluetooth communication data.

Meanwhile, the first virtual machine may receive touch input to the first display or the second display, and may transmit information regarding the touch input to the second virtual machine or the third virtual machine.

Meanwhile, the touch input may not be input to the second virtual machine and the third virtual machine.

Meanwhile, the information regarding the touch input may include coordinate information of the touch input.

Meanwhile, in response to the touch input corresponding to an overlay provided by the third virtual machine, among a plurality of overlays displayed on the first display, the first virtual machine in the processor may not transmit the information regarding the touch input to the second virtual machine and may transmit the information regarding the touch input to the third virtual machine.

Meanwhile, in response to the touch input corresponding to an overlay provided by the second virtual machine, among a plurality of overlays displayed on the first display, the first virtual machine in the processor may transmit the information regarding the touch input to the second virtual machine.

Meanwhile, the first virtual machine in the processor may be configured to store the coordinate information of the touch input in the shared memory.

Meanwhile, the first virtual machine may transmit a buffer index regarding the shared memory to the second virtual machine or the third virtual machine, and the second virtual machine or the third virtual machine may read the coordinate information of the touch input written in the shared memory based on the received buffer index.

Meanwhile, the input and output server interface in the first virtual machine may receive requests for transmission of the same data from the input and output client interfaces in the second virtual machine and the third virtual machine and may transmit a request for allocation of the shared memory to a security manager, and the security manager may allocate the shared memory using the hypervisor and write shared data in the shared memory.

In accordance with another aspect of the present disclosure, there are provided a signal processing device including a processor configured to perform signal processing for a display located in a vehicle, wherein the processor executes first to third virtual machines on a hypervisor in the processor, the second virtual machine is operated for a first display, the third virtual machine is operated for a second display, and the first virtual machine in the processor includes a first interface configured to receive CAN communication data and a radio signal from a tuner in the vehicle and an input and output server interface configured to transmit data corresponding to the CAN communication data or the radio signal received from the first interface to at least one of the second virtual machine or the third virtual machine, and a display apparatus for vehicle including the same.

Meanwhile, the first virtual machine may receive and process wheel speed sensor data of the vehicle included in the CAN communication data, and may transmit the processed wheel speed sensor data or speed information corresponding to the processed wheel speed sensor data to at least one of the second virtual machine or the third virtual machine.

### Effects of the invention

A signal processing device according to an embodiment of the present disclosure and a display apparatus for vehicle including the same include a processor configured to perform signal processing for a display located in a vehicle, wherein the processor executes first to third virtual machines on a hypervisor in the processor, the second virtual machine is operated for a first display, the third virtual machine is operated for a second display, and the first virtual machine in the processor includes a first interface configured to receive sensor data from a sensor device in the vehicle and a radio signal from a tuner in the vehicle and an input and output server interface configured to transmit data corresponding to the sensor data or the radio signal received from the first interface to at least one of the second virtual machine or the third virtual machine. Consequently, the sensor data may be rapidly received and processed. In particular, the sensor data may be rapidly shared even though the number of virtual machines is increased or the number of displays is increased. Furthermore, the sensor data may be rapidly shared even though operating systems of the plurality of virtual machines are different from each other.

Meanwhile, the second virtual machine and the third virtual machine may include input and output client interfaces configured to receive the data corresponding to the sensor data or the radio signal from the first interface in the first virtual machine. Consequently, the sensor data may be rapidly shared.

Meanwhile, the second virtual machine and the third virtual machine may not perform data communication with the sensor device in the vehicle and the tuner in the vehicle. Consequently, the sensor data may be rapidly received and processed.

Meanwhile, the first virtual machine may be configured to store the data corresponding to the sensor data or the radio signal in a shared memory, and at least one of the second virtual machine or the third virtual machine may receive the data corresponding to the sensor data or the radio signal stored in the shared memory. Consequently, the data corresponding to the sensor data or the radio signal may be rapidly received and processed.

Meanwhile, the first virtual machine may transmit a buffer index regarding the shared memory, in which the data corresponding to the sensor data or the radio signal are stored, to the second virtual machine or the third virtual machine, and the second virtual machine or the third virtual machine may read the data corresponding to the sensor data or the radio signal stored in the shared memory based on the received buffer index. Consequently, the data corresponding to the sensor data or the radio signal may be rapidly shared.

Meanwhile, the first virtual machine may receive and process wheel speed sensor data of the vehicle through the first interface, and may transmit the processed wheel speed sensor data or speed information corresponding to the processed wheel speed sensor data to at least one of the second virtual machine or the third virtual machine through the input and output server interface. Consequently, the wheel speed sensor data of the vehicle may be rapidly shared.

Meanwhile, the first virtual machine may receive and process air conditioning data of the vehicle through the first interface, and may transmit the processed air conditioning data or in-vehicle temperature information corresponding to the processed air conditioning data to at least one of the second virtual machine or the third virtual machine through the input and output server interface. Consequently, the air conditioning data of the vehicle may be rapidly shared.

Meanwhile, the first virtual machine may perform a supervisory service for system and display management and a system service for external device connection control and vehicle information management. Consequently, internal system management may be efficiently performed.

Meanwhile, the sensor data from the sensor device in the vehicle may be received based on CAN communication, and the first interface in the first virtual machine in the processor may further receive USB data or Bluetooth communication data. Consequently, CAN communication-based data may be rapidly shared.

Meanwhile, the first virtual machine may receive touch input to the first display or the second display, and may transmit information regarding the touch input to the second virtual machine or the third virtual machine. Consequently, the touch input may be rapidly and accurately processed. In addition, the touch input may be rapidly and accurately processed even though the number of virtual machines is increased. Furthermore, the touch input may be rapidly and accurately processed even though operating systems of the plurality of virtual machines are different from each other.

Meanwhile, the touch input may not be input to the second virtual machine and the third virtual machine. Consequently, the touch input may be rapidly and accurately processed.

Meanwhile, the information regarding the touch input may include coordinate information of the touch input. Consequently, the touch input may be rapidly and accurately processed.

Meanwhile, in response to the touch input corresponding to an overlay provided by the third virtual machine, among a plurality of overlays displayed on the first display, the first virtual machine in the processor may not transmit the information regarding the touch input to the second virtual machine and may transmit the information regarding the touch input to the third virtual machine. Consequently, the touch input may be rapidly and accurately processed.

Meanwhile, in response to the touch input corresponding to an overlay provided by the second virtual machine, among a plurality of overlays displayed on the first display, the first virtual machine in the processor may transmit the information regarding the touch input to the second virtual machine. Consequently, the touch input may be rapidly and accurately processed.

Meanwhile, the first virtual machine in the processor may be configured to store the coordinate information of the touch input in the shared memory. Consequently, the touch input may be rapidly and accurately processed.

Meanwhile, the first virtual machine may transmit a buffer index regarding the shared memory to the second virtual machine or the third virtual machine, and the second virtual machine or the third virtual machine may read the coordinate information of the touch input written in the shared memory based on the received buffer index. Consequently, the touch input may be rapidly and accurately processed.

Meanwhile, the input and output server interface in the first virtual machine may receive requests for transmission of the same data from the input and output client interfaces in the second virtual machine and the third virtual machine and may transmit a request for allocation of the shared memory to a security manager, and the security manager may allocate the shared memory using the hypervisor and write shared data in the shared memory. Consequently, the shared data may be rapidly and accurately shared.

A signal processing device according to another embodiment of the present disclosure and a display apparatus for vehicle including the same include a processor configured to perform signal processing for a display located in a vehicle, wherein the processor executes first to third virtual machines on a hypervisor in the processor, the second virtual machine is operated for a first display, the third virtual machine is operated for a second display, and the first virtual machine in the processor includes a first interface configured to receive CAN communication data and a radio signal from a tuner in the vehicle and an input and output server interface configured to transmit data corresponding to the CAN communication data or the radio signal received from the first interface to at least one of the second virtual machine or the third virtual machine. Consequently, the CAN communication data may be rapidly received and processed. In particular, the CAN communication data may be rapidly shared even though the number of virtual machines is increased or the number of displays is increased. Furthermore, the CAN communication data may be rapidly shared even though operating systems of the plurality of virtual machines are different from each other.

Meanwhile, the first virtual machine may receive and process wheel speed sensor data of the vehicle included in the CAN communication data, and may transmit the processed wheel speed sensor data or speed information corresponding to the processed wheel speed sensor data to at least one of the second virtual machine or the third virtual machine. Consequently, the wheel speed sensor data of the vehicle may be rapidly received and processed.

### BRIEF DESCRIPTION OF THE DRAWINGS

FIG. 1A is a view showing an example of the exterior and interior of a vehicle;
FIG. 1B is a view showing another example of the interior of the vehicle;
FIG. 2 is a view showing the external appearance of a display apparatus for vehicle according to an embodiment of the present disclosure;
FIG. 3 illustrates an example of an internal block diagram of the display apparatus for vehicle of FIG. 2;
FIG. 4 is a view showing a system driven in a signal processing device related to the present disclosure;
FIG. 5 is a view showing an example of a system driven in a signal processing device according to an embodiment of the present disclosure;
FIG. 6 is a view showing another example of the system driven in the signal processing device according to the embodiment of the present disclosure;
FIG. 7 is a view showing a further example of the system driven in the signal processing device according to the embodiment of the present disclosure;
FIGS. 8 to 9B are views referred to in the description of FIG. 5; and
FIGS. 10A to 13D are views referred to in the description of FIGS. 5 to 7.

### DETAILED DESCRIPTION OF THE PREFERRED EMBODIMENTS

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" may be used interchangeably.

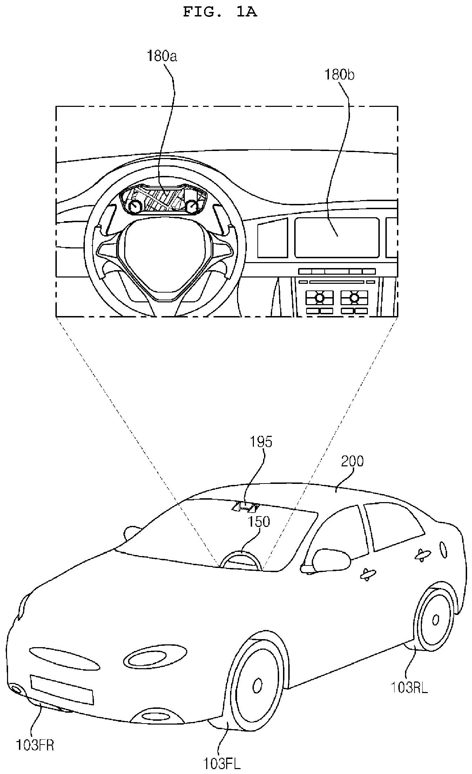

FIG. 1A is a view showing an example of the exterior and interior of a vehicle.

Referring to the figure, the vehicle 200 is moved by a plurality of wheels 103FR, 103FL, 103RL,... rotated by a power source and a steering wheel 150 configured to adjust an advancing direction of the vehicle 200.

Meanwhile, the vehicle 200 may be provided with a camera 195 configured to acquire an image of the front of the vehicle.

Meanwhile, the vehicle 200 may be further provided therein with a plurality of displays 180a and 180b configured to display images and information.

In FIG. 1A, a cluster display 180a and an audio video navigation (AVN) display 180b are illustrated as the plurality of displays 180a and 180b. In addition, a head up display (HUD) may also be used.

Meanwhile, the audio video navigation (AVN) display 180b may also be called a center information display.

Meanwhile, the vehicle 200 described in this specification may be a concept including all of a vehicle having an engine as a power source, a hybrid vehicle having an engine and an electric motor as a power source, and an electric vehicle having an electric motor as a power source.

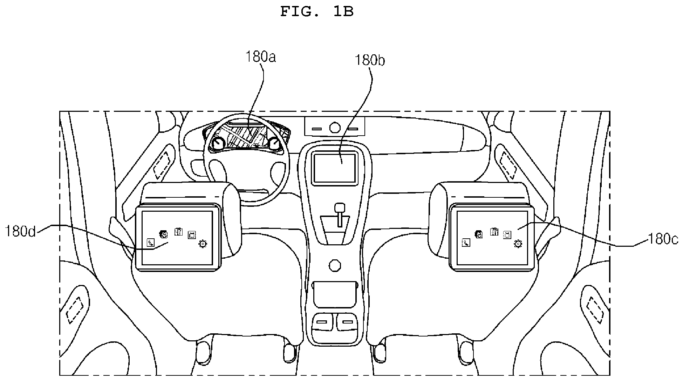

FIG. 1B is a view showing another example of the interior of the vehicle.

Referring to the figure, a cluster display 180a, an audio video navigation (AVN) display 180b, rear seat entertainment displays 180c and 180d, and a rear-view mirror display (not shown) may be located in the vehicle.

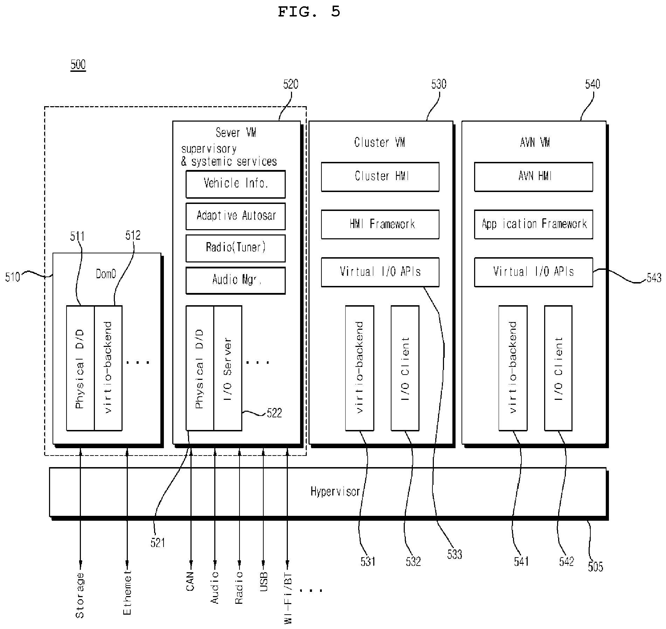

The embodiment of the present disclosure proposes a scheme for a display apparatus 100 for vehicle including a plurality of displays 180a to 180d to rapidly and accurately process touch input. This will be described with reference to FIG. 5 and subsequent figures.

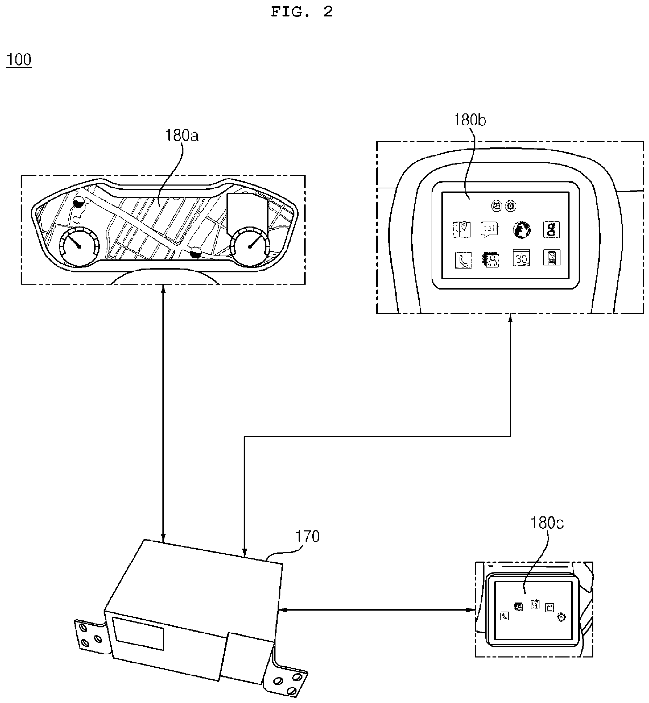

FIG. 2 is a view showing the external appearance of a display apparatus for vehicle according to an embodiment of the present disclosure.

The display apparatus 100 for vehicle according to the embodiment of the present disclosure may include a plurality of displays 180a and 180b and a signal processing device 170 configured to perform signal processing in order to display images and information on the plurality of displays 180a and 180b.

The first display 180a, which is one of the plurality of displays 180a and 180b, may be a cluster display 180a configured to display a driving state and operation information, and the second display 180b may be an audio video navigation (AVN) display 180b configured to display vehicle driving information, a navigation map, various kinds of entertainment information, or an image.

The signal processing device 170 may have a processor 175 provided therein, and first to third virtual machines 520 to 540 may be executed by a hypervisor 505 in the processor 175.

The second virtual machine 530 may be operated for the first display 180a, and the third virtual machine 540 may be operated for the second display 180b.

Meanwhile, the first virtual machine 520 in the processor 175 receives sensor data from a sensor device 760 in the vehicle 100 and a radio signal from a tuner 105 in the vehicle 100, and transmits data corresponding to the received sensor data or radio signal to at least one of the second virtual machine 530 or the third virtual machine 540. Consequently, the sensor data may be rapidly received and processed. In particular, the sensor data may be rapidly shared even though the number of virtual machines is increased or the number of displays is increased. Furthermore, the sensor data may be rapidly shared even though operating systems of the plurality of virtual machines are different from each other.

Meanwhile, the first virtual machine 520 in the processor 175 may be configured to set a shared memory 508 based on the hypervisor 505 for transmission of the same data to the second virtual machine 530 and the third virtual machine 540. Consequently, the first display 180a and the second display 180b in the vehicle may display the same information or the same images in a synchronized state.

Meanwhile, the first virtual machine 520 in the processor 175 shares at least some of data with the second virtual machine 530 and the third virtual machine 540 for divided processing of data. Consequently, the plurality of virtual machines for the plurality of displays in the vehicle may divide and process data.

Meanwhile, the first virtual machine 520 in the processor 175 may receive and process wheel speed sensor data of the vehicle, and may transmit the processed wheel speed sensor data to at least one of the second virtual machine 530 or the third virtual machine 540. Consequently, at least one virtual machine may share the wheel speed sensor data of the vehicle.

Meanwhile, the display apparatus 100 for vehicle according to the embodiment of the present disclosure may further include a rear seat entertainment (RSE) display 180c configured to display driving state information, simple navigation information, various kinds of entertainment information, or an image.

The signal processing device 170 may further execute a fourth virtual machine (not shown), in addition to the first to third virtual machines 520 to 540, on the hypervisor 505 in the processor 175 to control the RSE display 180c.

Consequently, it is possible to control various displays 180a to 180c using a single signal processing device 170.

Meanwhile, some of the plurality of displays 180a to 180c may be operated based on a Linux Operating System (OS), and others may be operated based on a Web Operating System (OS) .

In response to touch being input to any one of the displays 180a and 180b or 180a to 180c configured to be operated under various operating systems, the signal processing device 170 according to the embodiment of the present disclosure may be configured to rapidly and accurately process the touch input.

Meanwhile, FIG. 2 illustrates that a vehicle speed indicator 212a and an in-vehicle temperature indicator 213a are displayed on the first display 180a, a home screen 222 including a plurality of applications, a vehicle speed indicator 212b, and an in-vehicle temperature indicator 213b is displayed on the second display 180b, and a home screen 222b including a plurality of applications and an in-vehicle temperature indicator 213c is displayed on the third display 180c.

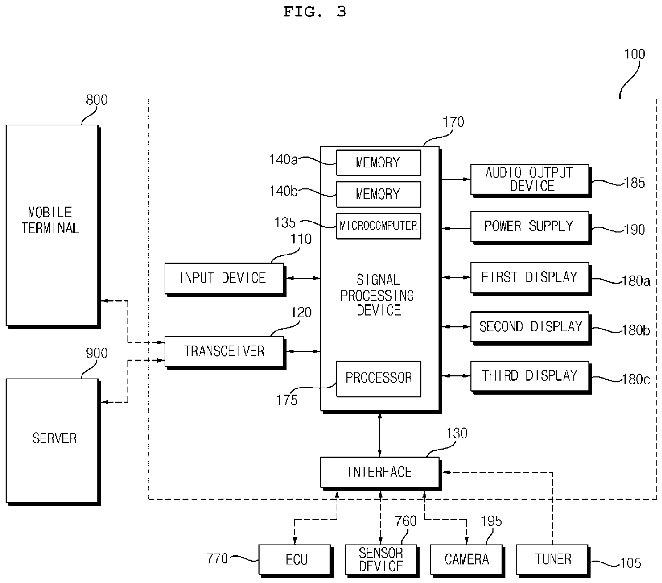

FIG. 3 illustrates an example of an internal block diagram of the display apparatus for vehicle according to the embodiment of the present disclosure.

Referring to the figure, the display apparatus 100 for vehicle according to the embodiment of the present disclosure may include an input device 110, a transceiver 120, an interface 130, a signal processing device 170, a plurality of displays 180a to 180c, an audio output device 185, and a power supply 190.

The input device 110 may include a physical button or pad for button input or touch input.

Meanwhile, the input device 110 may include a touch sensor (not shown) configured to sense touch input to the displays 180a, 180b, and 180c.

Meanwhile, the input device 110 may include a microphone (not shown) for user voice input.

The transceiver 120 may wirelessly exchange data with a mobile terminal 800 or a server 900.

In particular, the transceiver 120 may wirelessly exchange data with a mobile terminal of a vehicle driver. Any of various data communication schemes, such as Bluetooth, Wi-Fi, WIFI Direct, and APIX, may be used as a wireless data communication scheme.

The transceiver 120 may receive weather information and road traffic situation information, such as transport protocol expert group (TPEG) information, from the mobile terminal 800 or the server 900. To this end, the transceiver 120 may include a mobile communication module (not shown).

The interface 130 may receive sensor information from an electronic control unit (ECU) 770 or a sensor device 760, and may transmit the received information to the signal processing device 170.

Here, the sensor information may include at least one of vehicle direction information, vehicle position information (global positioning system (GPS) information), vehicle angle information, vehicle velocity information, vehicle acceleration information, vehicle inclination information, vehicle forward/backward movement information, battery information, fuel information, tire information, vehicle lamp information, in-vehicle temperature information, and in-vehicle humidity information.

The sensor information may be acquired from a heading sensor, a yaw sensor, a gyro sensor, a position sensor, a vehicle forward/backward movement sensor, a wheel sensor, a vehicle velocity sensor, a car body inclination sensor, a battery sensor, a fuel sensor, a tire sensor, a steering-wheel-rotation-based steering sensor, an in-vehicle temperature sensor, or an in-vehicle humidity sensor. Meanwhile, the position module may include a GPS module configured to receive GPS information.

Meanwhile, the interface 130 may receive front-of-vehicle image data, side-of-vehicle image data, rear-of-vehicle image data, and obstacle-around-vehicle distance information from a camera 195 or lidar (not shown), and may transmit the received information to the signal processing device 170.

The audio output device 185 may convert an electrical signal from the signal processing device 170 into an audio signal, and may output the audio signal. To this end, the audio output device 185 may include a speaker.

The power supply 190 may supply power necessary to operate components under control of the signal processing device 170. In particular, the power supply 190 may receive power from a battery in the vehicle.

The signal processing device 170 may control overall operation of each device in the display apparatus 100 for vehicle.

Meanwhile, the signal processing device 170 may be implemented in the form of a system on chip (SOC).

The signal processing device 170 may include a processor 175 configured to perform signal processing for the displays 180a, 180b, and 180c, a first memory 140a and a second memory 140b configured to store various data, and a microcomputer 135.

The first memory 140a, which is a nonvolatile memory, may store various data even in a standby mode or when power is off.

For example, the first memory 140a may store a file corresponding to a first application executed by any one of a plurality of virtual machines 510 to 550 based on entry into the standby mode.

As another example, the first memory 140a may store an operating system (OS).

Meanwhile, the first memory 140a may store various data for overall operation of the display apparatus 100 for vehicle, such as programs for processing or control of the signal processing device 170.

Meanwhile, the second memory 140b, which is a volatile memory, may erase various data in the standby mode or when power is off, and may temporarily store data in an active mode.

For example, the second memory 140b may load the file stored in the first memory 140a based on switching from the standby mode to the active mode.

As another example, the second memory 140b may load the operating system (OS) stored in the first memory 140a based on switching from the standby mode to the active mode.

Meanwhile, the processor 175 may drive the hypervisor 505 (see FIG. 5).

Meanwhile, the processor 175 may execute the first to fourth virtual machines 520 to 550 on the hypervisor 505 (see FIG. 5) in the processor 175.

Meanwhile, the processor 175 may further execute a legacy virtual machine 510 configured to receive and process Ethernet data. For example, as shown in FIG. 5, the legacy virtual machine 510 may be executed by the first virtual machine 520 in the processor 175.

Among the first to fourth virtual machines 520 to 550 (see FIG. 5), the first virtual machine 520 may be called a server virtual machine, and the second to fourth virtual machines 530 to 550 may be called guest virtual machines.

The second virtual machine 530 may be operated for the first display 180a, the third virtual machine 540 may be operated for the second display 180b, and the fourth virtual machine 550 may be operated for the third display 180c.

For example, the first virtual machine 520 in the processor 175 may receive, process, and output vehicle sensor data, position information data, camera image data, audio data, or touch input data. Data processed only by a legacy virtual machine and data processed by the first virtual machine 520 may be distinguished from each other, whereby data processing may be efficiently performed. In particular, the first virtual machine 520 may process most of the data, whereby 1:N data sharing may be achieved.

As another example, the first virtual machine 520 may directly receive and process CAN communication data, audio data, radio data, USB data, and wireless communication data for the second to fourth virtual machines 530 to 550.

The first virtual machine 520 may transmit the processed data to the second to fourth virtual machines 530 to 550.

Consequently, only the first virtual machine 520, among the second to fourth virtual machines 530 to 550, may receive communication data and external input data, and may perform signal processing, whereby load in signal processing by the other virtual machines may be reduced and 1:N data communication may be achieved, and therefore synchronization at the time of data sharing may be achieved.

Meanwhile, the first virtual machine 520 writes some of data in a first shared memory (not shown) to be transmitted to the second virtual machine 530, and writes some other of data in the first shared memory (not shown) to be transmitted to the third virtual machine 540. The second virtual machine 530 and the third virtual machine 540 are configured to process the received data, and write the processed data in a second shared memory (not shown).

At this time, data may be any one of image data, audio data, navigation data, and voice recognition data.

Meanwhile, the first virtual machine 520 may process some other of data, and may be configured to write the processed data in the second shared memory (not shown). That is, the first virtual machine 520 may perform data processing in addition to the second virtual machine 530 and the third virtual machine 540.

Meanwhile, in response to a fourth virtual machine 550 configured to be operated for the third display 180c being executed in the processor 175, the first virtual machine 520 may write some other of data in the first shared memory (not shown), and the fourth virtual machine 550 may process the received data and may be configured to write the processed data in the second shared memory (not shown).

Meanwhile, the first virtual machine 520 may generate command queues for distributed processing of data in the second virtual machine 530 to the fourth virtual machine 550. Consequently, the plurality of virtual machines may divide and process data.

Meanwhile, in response to the second virtual machine 530 to the fourth virtual machine 550 sharing the same data, the first virtual machine 520 in the processor 175 may generate one command queue. Consequently, the same data may be synchronized and shared.

Meanwhile, the first virtual machine 520 may generate command queues corresponding to the number of virtual machines for distributed processing of data.

Meanwhile, the first virtual machine 520 may be configured to transmit at least some of data to at least one of the second virtual machine 530 to the fourth virtual machine 550 for distributed processing of data.

For example, the first virtual machine 520 may allocate the first shared memory (not shown) for transmitting at least some of data to at least one of the second virtual machine 530 to the fourth virtual machine 550, and image data processed by the second virtual machine 530 or the third virtual machine 540 may be written in the second shared memory (not shown).

Meanwhile, the first virtual machine 520 may be configured to write data in the shared memory 508, whereby the second virtual machine 530 to the fourth virtual machine 550 share the same data.

For example, the first virtual machine 520 may be configured to write radio data or wireless communication data in the shared memory 508, whereby the second virtual machine 530 to the fourth virtual machine 550 share the same data. Consequently, 1:N data sharing may be achieved.

Eventually, the first virtual machine 520 may process most of the data, whereby 1:N data sharing may be achieved.

Meanwhile, the first virtual machine 520 in the processor 175 may be configured to set the shared memory 508 based on the hypervisor 505 in order to transmit the same data to the second virtual machine 530 to the fourth virtual machine 550.

That is, the first virtual machine 520 in the processor 175 may transmit the same data to the second virtual machine 530 to the fourth virtual machine 550 in a synchronized state using the shared memory 508 based on the hypervisor 505. Consequently, the plurality of displays 180a to 180c in the vehicle may display the same images in a synchronized state.

Meanwhile, the signal processing device 170 may process various signals, such as an audio signal, an image signal, and a data signal.

Meanwhile, the first virtual machine 520 in the processor 175 may receive sensor data from the sensor device 760 in the vehicle 100 and a radio signal from the tuner 105 in the vehicle 100, and may transmit data corresponding to the sensor data or the radio signal to at least one of the second virtual machine 530 or the third virtual machine 540. Consequently, the data corresponding to the sensor data or the radio signal may be rapidly shared.

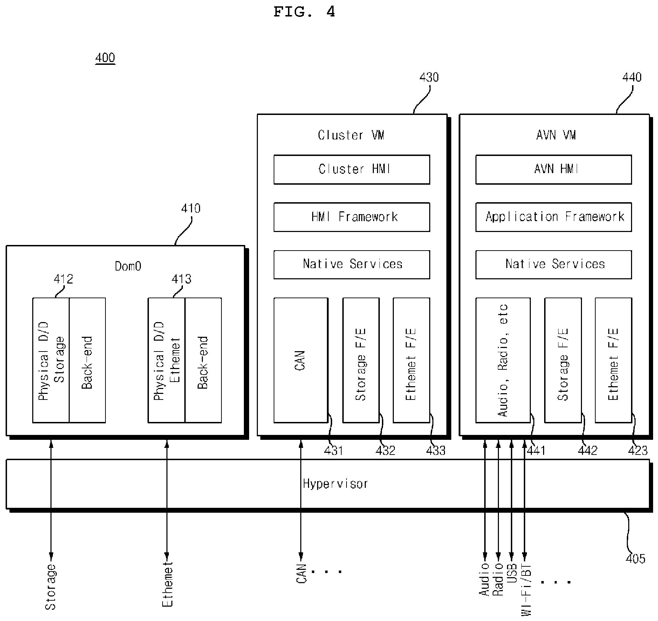

FIG. 4 is a view showing a system driven in a signal processing device related to the present disclosure.

Referring to the figure, FIG. 4 is a view illustrating that virtual machines are used for the cluster display 180a and the AVN display 180b.

The system 400 driven in the signal processing device of FIG. 4 illustrates that a cluster virtual machine 430 and an AVN virtual machine 440 are executed through a hypervisor 405 in the processor 175.

Meanwhile, the system 400 driven in the signal processing device of FIG. 4 illustrates that a legacy virtual machine 410 is also executed on the hypervisor 405 in the processor 175.

The legacy virtual machine 410 may include an interface 412 for data communication with the memory 140 and an interface 413 for Ethernet communication.

Meanwhile, the cluster virtual machine 430 may include an interface 431 for CAN communication, an interface 432 for communication with the interface 412 of the legacy virtual machine 410, and an interface 433 for communication with the interface 413 of the legacy virtual machine 410.

Meanwhile, the AVN virtual machine 440 may include an interface 441 for input and output of audio data, radio data, USB data, and wireless communication data, an interface 442 for communication with the interface 412 of the legacy virtual machine 410, and an interface 443 for communication with the interface 413 of the legacy virtual machine 410.

In the system 400, there is a disadvantage in that CAN communication data are input and output only in the cluster virtual machine 430, whereby the CAN communication data cannot be utilized in the AVN virtual machine 440.

Also, in the system 400 of FIG. 4, there is a disadvantage in that audio data, radio data, USB data, and wireless communication data are input and output only in the AVN virtual machine 440, whereby these data cannot be utilized in the cluster virtual machine 430.

Meanwhile, there is a disadvantage in that the cluster virtual machine 430 and the AVN virtual machine 440 must include the interfaces 431 and 432 and the interfaces 441 and 442, respectively, for memory data and Ethernet communication data input and output in the legacy virtual machine 410.

Therefore, the present disclosure proposes a scheme for improving the system of FIG. 4. That is, unlike FIG. 4, virtual machines are classified into a server virtual machine and guest virtual machines for inputting and outputting various memory data and communication data not in the guest virtual machines but in the server virtual machine. This will be described with reference to FIG. 5 and subsequent figures.

FIG. 5 is a view showing an example of a system driven in a signal processing device according to an embodiment of the present disclosure.

Referring to the figure, the system 500 of FIG. 5 illustrates that the first virtual machine 520, which is a server virtual machine, the second virtual machine 530, which is a guest virtual machine, and the third virtual machine 540, which is a guest virtual machine, are executed on the hypervisor 505 in the processor 175 of the signal processing device 170.

The second virtual machine 530 may be a virtual machine for the cluster display 180a, and the third virtual machine 540 may be a virtual machine for the AVN display 180b.

That is, the second virtual machine 530 and the third virtual machine 540 may be operated for image rendering of the cluster display 180a and the AVN display 180b, respectively.

Meanwhile, the system 50 driven in the signal processing device 170 of FIG. 5 illustrates that a legacy virtual machine 510 is also executed on the hypervisor 505 in the processor 175.

The legacy virtual machine 510 may include an interface 511 for data communication with the memory 140 and Ethernet communication.

The figure illustrates that the interface 511 is a physical device driver; however, various modifications are possible.

Meanwhile, the legacy virtual machine 510 may further include a virtio-backend interface 512 for data communication with the second and third virtual machines 530 and 540.

The first virtual machine 520 may include an interface 521 for input and output of audio data, radio data, USB data, and wireless communication data and an input and output server interface 522 for data communication with the guest virtual machines.

That is, the first virtual machine 520, which is a server virtual machine, may provide inputs/outputs (I/O) difficult to virtualize with standard virtualization technology (VirtIO) to a plurality of guest virtual machines, such as the second and third virtual machines 530 and 540.

Meanwhile, the first virtual machine 520, which is a server virtual machine, may control radio data and audio data at a supervisor level, and may provide the data to a plurality of guest virtual machines, such as the second and third virtual machines 530 and 540.

Meanwhile, the first virtual machine 520 may perform a supervisory service for system and display management and a system service for external device connection control and vehicle information management. Consequently, internal system management may be efficiently performed.

Meanwhile, the first virtual machine 520, which is a server virtual machine, may process vehicle data, sensor data, and surroundings-of-vehicle information, and may provide the processed data or information to a plurality of guest virtual machines, such as the second and third virtual machines 530 and 540.

Meanwhile, the first virtual machine 520 may provide supervisory services, such as processing of vehicle data and audio routing management.

Next, the second virtual machine 530 may include an input and output client interface 532 for data communication with the first virtual machine 520 and APIs 533 configured to control the input and output client interface 532.

In addition, the second virtual machine 530 may include a virtio-backend interface for data communication with the legacy virtual machine 510.

The second virtual machine 530 may receive memory data by communication with the memory 140 or Ethernet data by Ethernet communication from the virtio-backend interface 512 of the legacy virtual machine 510 through the virtio-backend interface.

Next, the third virtual machine 540 may include an input and output client interface 542 for data communication with the first virtual machine 520 and APIs 543 configured to control the input and output client interface 542.

In addition, the third virtual machine 540 may include a virtio-backend interface for data communication with the legacy virtual machine 510.

The third virtual machine 540 may receive memory data by communication with the memory 140 or Ethernet data by Ethernet communication from the virtio-backend interface 512 of the legacy virtual machine 510 through the virtio-backend interface.

Meanwhile, the legacy virtual machine 510 may be provided in the first virtual machine 520, unlike FIG. 5.

In the system 500, CAN communication data are input and output only in the first virtual machine 520, but may be provided to a plurality of guest virtual machines, such as the second and third virtual machines 530 and 540, through data processing in the first virtual machine 520. Consequently, 1:N data communication by processing of the first virtual machine 520 may be achieved.

Also, in the system 500 of FIG. 5, audio data, radio data, USB data, and wireless communication data are input and output only in the first virtual machine 520, but may be provided to a plurality of guest virtual machines, such as the second and third virtual machines 530 and 540, through data processing in the first virtual machine 520. Consequently, 1:N data communication by processing of the first virtual machine 520 may be achieved.

Also, in the system 500 of FIG. 5, touch input to the first display 180a or the second display 180b is input only to the first virtual machine 520 and is not input to the second virtual machine 530 and the third virtual machine 540. Information regarding the touch input is transmitted to the second virtual machine 530 or the third virtual machine 540.

Consequently, the touch input may be rapidly and accurately processed. In addition, the touch input may be rapidly and accurately processed even though the number of virtual machines that are driven is increased.

Meanwhile, in the system 500 of FIG. 5, the second and third virtual machines 530 and 540 may be operated based on different operating systems.

For example, the second virtual machine 530 may be operated based on a Linux OS, and the third virtual machine 540 may be operated based on a Web OS.

In the first virtual machine 520, the shared memory 508 based on the hypervisor 505 is set for data sharing, even though the second and third virtual machines 530 and 540 are operated based on different operating systems. Even though the second and third virtual machines 530 and 540 are operated based on different operating systems, therefore, the same data or the same images may be shared in a synchronized state. Eventually, the plurality of displays 180a and 180b may display the same data or the same images in a synchronized state.

Meanwhile, the first virtual machine 520 transmits information regarding the touch input to the second virtual machine 530 or the third virtual machine 540 even though the second and third virtual machines 530 and 540 are operated based on different operating systems. Consequently, the touch input may be rapidly and accurately processed even though the second and third virtual machines 530 and 540 are operated based on different operating systems (OS).

Meanwhile, the first virtual machine 520 may include a display manager 527 configured to control overlays displayed on the first display 180a and the second display 180b and a display layer server 529.

The display layer server 529 may receive a first overlay provided by the second virtual machine 530 and a second overlay provided by the third virtual machine 540.

Meanwhile, the display layer server 529 may transmit a virtual overlay, which is different from the first overlay or the second overlay, to at least one of the second virtual machine 530 or the third virtual machine 540.

Meanwhile, the display manager 527 in the first virtual machine 520 may receive the first overlay provided by the second virtual machine 530 and the second overlay provided by the third virtual machine 540 through the display layer server 529.

The display manager 527 in the first virtual machine 520 may be configured to transmit the virtual overlay, which is different from the first overlay or the second overlay, to at least one of the second virtual machine 530 or the third virtual machine 540 through the display layer server 529.

In response thereto, the second virtual machine 530 may be configured to combine and display the first overlay and the virtual overlay on the first display 180a.

In addition, the third virtual machine 540 may be configured to combine and display the second overlay and the virtual overlay on the second display 180b.

Meanwhile, the first virtual machine 520 may include an input manager 524 configured to receive an input signal from the outside. At this time, the input signal may be an input signal from a predetermined button (start button) in the vehicle, a touch input signal, or a voice input signal.

For example, the input manager 524 in the first virtual machine 520 may receive touch input from the first display 180a or the second display 180b.

Meanwhile, the first virtual machine 520 may include a touch server 528 configured to transmit information regarding the touch input related to the touch input from the first display 180a or the second display 180b to the second virtual machine 530 or the third virtual machine 540.

For example, in response to touch input corresponding to the first display 180a, the touch server 528 in the first virtual machine 520 may transmit information regarding the touch input to the second virtual machine 530.

Meanwhile, the touch server 528 in the first virtual machine 520 may receive the touch input from the first display 180a or the second display 180b.

Meanwhile, the first virtual machine 520 includes a first interface 521 configured to receive sensor data from the sensor device 760 in the vehicle 100 and a radio signal from the tuner 105 in the vehicle 100 and an input and output server interface 522 configured to transmit data corresponding to the sensor data or the radio signal received from the first interface 521 to at least one of the second virtual machine 530 or the third virtual machine 540. Consequently, the sensor data may be rapidly received and processed.

Meanwhile, the second virtual machine 530 and the third virtual machine 540 may include input and output client interfaces 532 and 542 configured to receive the data corresponding to the sensor data or the radio signal from the first interface 521 in the first virtual machine 520. Consequently, the sensor data may be rapidly shared.

Meanwhile, the second virtual machine 530 and the third virtual machine 540 do not perform data communication with the sensor device 760 in the vehicle 100 and the tuner 105 in the vehicle 100. Consequently, the sensor data may be rapidly received and processed.

Meanwhile, the first virtual machine 520 may be configured to store the data corresponding to the sensor data or the radio signal in the shared memory 508, and at least one of the second virtual machine 530 or the third virtual machine 540 may receive the data corresponding to the sensor data or the radio signal stored in the shared memory 508. Consequently, the data corresponding to the sensor data or the radio signal may be rapidly received and processed.

Meanwhile, the first virtual machine 520 may transmit a buffer index regarding the shared memory 508, in which the data corresponding to the sensor data or the radio signal are stored, to the second virtual machine 530 or the third virtual machine 540, and the second virtual machine 530 or the third virtual machine 540 may read the data corresponding to the sensor data or the radio signal stored in the shared memory 508 based on the received buffer index. Consequently, the data corresponding to the sensor data or the radio signal may be rapidly shared.

Meanwhile, the first virtual machine 520 may receive and process wheel speed sensor data of the vehicle 100 through the first interface 521, and may transmit the processed wheel speed sensor data or speed information corresponding to the processed wheel speed sensor data to at least one of the second virtual machine 530 or the third virtual machine 540 through the input and output server interface 522. Consequently, the wheel speed sensor data of the vehicle 100 may be rapidly shared.

Meanwhile, the first virtual machine 520 may receive and process air conditioning data of the vehicle 100 through the first interface 521, and may transmit the processed air conditioning data or in-vehicle temperature information corresponding to the processed air conditioning data to at least one of the second virtual machine 530 or the third virtual machine 540 through the input and output server interface 522. Consequently, the air conditioning data of the vehicle 100 may be rapidly shared.

Meanwhile, the sensor data from the sensor device 760 in the vehicle 100 may be received based on CAN communication, and the first interface 521 in the first virtual machine 520 in the processor 175 may further receive USB data or Bluetooth communication data. Consequently, CAN communication-based data may be rapidly shared.

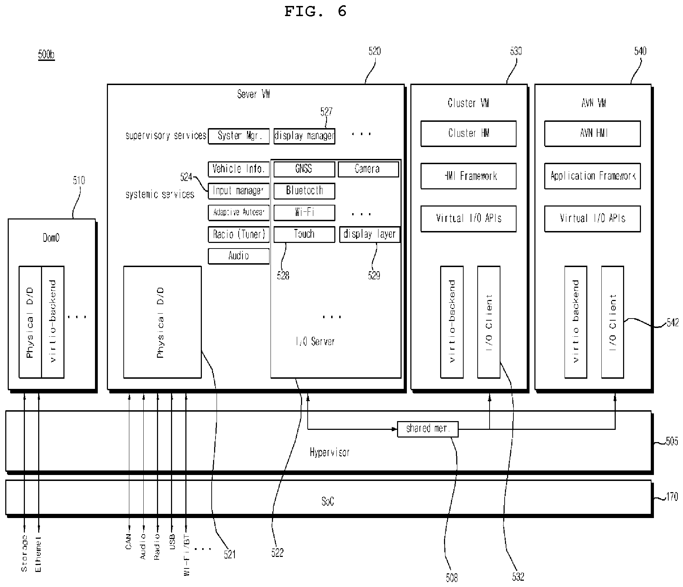

FIG. 6 is a view showing another example of the system driven in the signal processing device according to the embodiment of the present disclosure.

Referring to the figure, in the system 500b driven by the processor 175 in the signal processing device 170, the processor 175 in the signal processing device 170 executes the first to third virtual machines 520 to 540 on the hypervisor 505 in the processor 175, and the first virtual machine 520 in the processor 175 is configured to set the shared memory 508 based on the hypervisor 505 for transmission of data to the second and third virtual machines 530 and 540.

For example, information regarding touch input may be illustrated as the data. Consequently, the information regarding touch input may be transmitted to the second virtual machine 530 or the third virtual machine 540. Eventually, the touch input to the first display 180a or the second display 180b may be rapidly and accurately processed. In addition, the touch input may be rapidly and accurately processed even though the number of virtual machines that are driven is increased.

As another example, image data may be illustrated as the data. Consequently, an image may be displayed on the first display 180a or the second display 180b.

Meanwhile, in response to the same image data being shared in the shared memory 508, the plurality of displays 180a and 180b in the vehicle may display the same data in a synchronized state.

As another example, CAN communication data, audio data, radio data, USB data, wireless communication data, or position information data may be illustrated as the data. Consequently, information regarding the data may be displayed on the first display 180a or the second display 180b.

Meanwhile, although not shown in FIG. 6, the legacy virtual machine 510 may transmit memory data from the memory 140 or Ethernet data by Ethernet communication to the second and third virtual machines 530 and 540 using the shared memory 508 based on the hypervisor 505. Consequently, information corresponding to the memory data or the Ethernet data may be displayed on the first display 180a or the second display 180b.

Meanwhile, the first virtual machine 520 in the system 500b of FIG. 6 may include a display manager 527, a display layer server 529, an input manager 524, and a touch server 528, similarly to the first virtual machine 520 in the system 500 of FIG. 5.

Meanwhile, the input and output server interface 522 in the first virtual machine 520 in the system 500b of FIG. 6 may include a display layer server 529 and a touch server 528, unlike FIG. 5.

The operation of the display manager 527, the display layer server 529, the input manager 524, and the touch server 528 is the same to FIG. 5, and therefore a description thereof will be omitted.

Meanwhile, the first virtual machine 520 of FIG. 6 may further include a system manager for overall system control, a vehicle information manager for vehicle information management, an audio manager for audio control, and a radio manager for radio control.

Meanwhile, the input and output server interface 522 in the first virtual machine 520 in the system 500b of FIG. 6 may further include a GNSS server for GPS information input and output, a Bluetooth server for Bluetooth input and output, a Wi-Fi server for Wi-Fi input and output, and a camera server for camera data input and output.

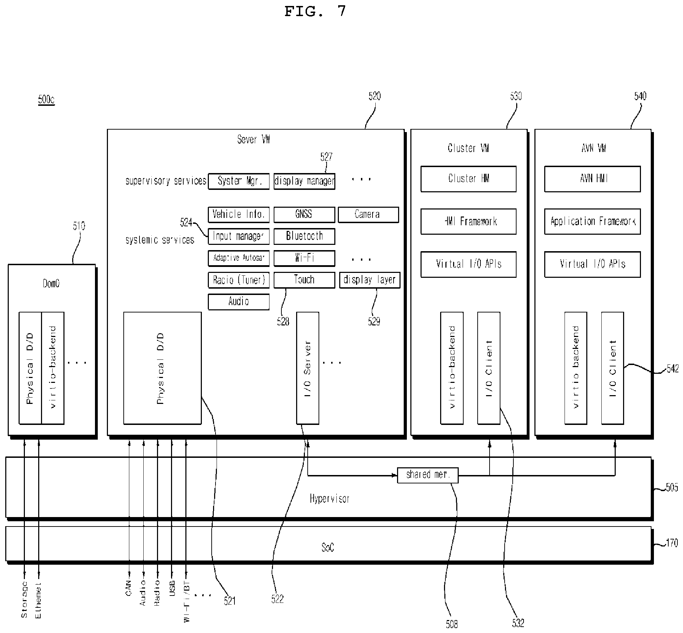

FIG. 7 is a view showing a further example of the system driven in the signal processing device according to the embodiment of the present disclosure.

Referring to the figure, the system 500c driven by the processor 175 in the signal processing device of FIG. 7 is almost similar to the system 500b of FIG. 6.

That is, like FIG. 6, the processor 175 of FIG. 7 executes the first to third virtual machines 520 to 540 on the hypervisor 505 in the processor 175.

In FIG. 7, however, the display layer server 529 and the touch server 528 may be provided and executed in the first virtual machine 520 outside the input and output server interface 522, unlike FIG. 6.

In addition, the GNSS server for GPS information input and output, the Bluetooth server for Bluetooth input and output, the Wi-Fi server for Wi-Fi input and output, and the camera server for camera data input and output may be provided and executed in the first virtual machine 520 outside the input and output server interface 522, unlike FIG. 6.

That is, the display manager 527, the display layer server 529, the input manager 524, and the touch server 528 may be provided and executed in the first virtual machine 520.

Meanwhile, the input and output server interface 522 in the first virtual machine 520 in the system 500b of FIG. 6 may include a display layer server 529 and a touch server 528, unlike FIG. 5.

The operation of the display manager 527, the display layer server 529, the input manager 524, and the touch server 528 is the same to FIG. 5, and therefore a description thereof will be omitted.

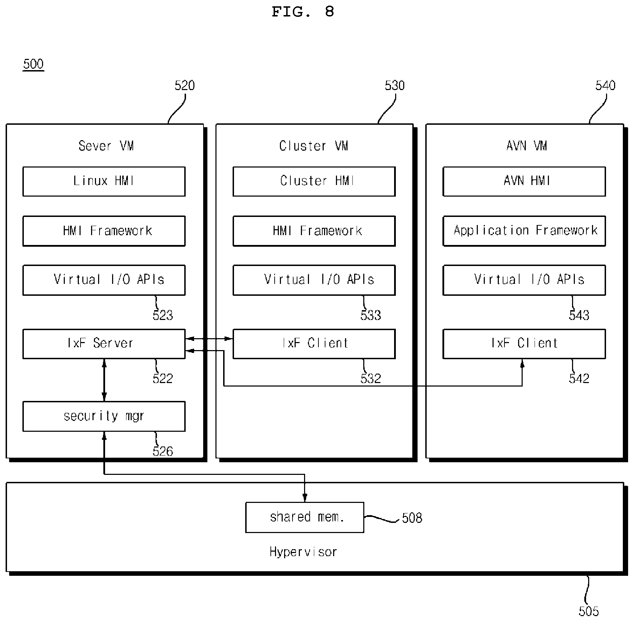

FIGS. 8 to 9B are views referred to in the description of FIG. 5.

First, FIG. 8 illustrates that the first to third virtual machines 520 to 540 are executed on the hypervisor 505 in the processor 175 of the system 500 according to the present disclosure and that the first virtual machine 520 in the processor 175 is configured to set the shared memory 508 based on the hypervisor 505 in order to transmit the same data to the second virtual machine 530 and the third virtual machine 540.

Consequently, the first display 180a and the second display 180b in the vehicle may display the same images in a synchronized state.

Meanwhile, high-speed data communication may be performed between the plurality of virtual machines. Furthermore, high-speed data communication may be performed even though the plurality of virtual machines is driven by different operating systems.

Meanwhile, the first virtual machine 520 in the processor 175 may not allocate memories corresponding in number to the virtual machines but may use a single shared memory 508, not memory allocation in response to transmitting the data processed by the first virtual machine 520 to another virtual machine. Consequently, 1:N data communication using the shared memory 508, not 1:1 data communication, may be performed between the virtual machines.

Meanwhile, the first virtual machine 520 in the processor 175 may include an input and output server interface 522 and a security manager 526.

Meanwhile, the second virtual machine 530 and the third virtual machine 540 may include input and output client interfaces 532 and 542, respectively. Consequently, high-speed data communication between the plurality of virtual machines may be performed using the input and output server interface 522 and the input and output client interfaces 532 and 542.

The input and output server interface 522 in the first virtual machine 520 may receive requests for transmission of the same data from the input and output client interfaces 532 and 542 in the second virtual machine 530 and the third virtual machine 540, and may transmit shared data to the shared memory 508 through the security manager 526 based thereon. Consequently, the shared data may be rapidly and accurately shared.

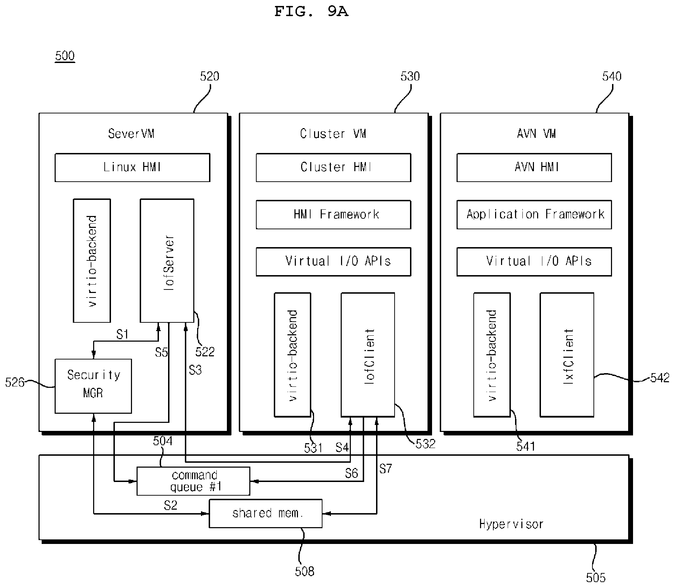

FIG. 9A is a view illustrating transmission of shared data in more detail.

Referring to the figure, in order to transmit shared data, the input and output server interface 522 in the first virtual machine 520 transmits a request for allocation of the shared memory 508 to the security manager 526 (S1).

Subsequently, the security manager 526 may allocate the shared memory 508 using the hypervisor 505 (S2), and may write shared data in the shared memory 508.

Meanwhile, the input and output client interfaces 532 and 542 may transmit a request for connection to the input and output server interface 522 after allocation of the shared memory 508 (S3).

Meanwhile, the input and output server interface 522 transmits information regarding shared memory 508 including key data to the input and output client interfaces 532 and 542 after allocation of the shared memory 508 (S4). At this time, the key data may be private key data.

Meanwhile, the first virtual machine 520 in the processor 175 may transmit information regarding the shared memory 508 to the second virtual machine 530 and the third virtual machine 540 after setting of the shared memory 508.

Subsequently, the input and output server interface 522 in the first virtual machine 520 is configured to generate a command or a command queue for event processing, other than data, to control distributed processing between the virtual machines (S5).

The figure illustrates that a command queue is generated in a command queue buffer 504 in the hypervisor 505 under control of the input and output server interface 522. However, the present disclosure is not limited thereto, and the command queue may be generated in the first virtual machine 520, not the hypervisor 505, under control of the input and output server interface 522.

Subsequently, the input and output client interfaces 532 and 542 access the command queue buffer 504 to receive the generated command queue or information regarding the command queue (S6).

For example, in response to the commands transmitted to the input and output client interfaces 532 and 542 being the same, the generated command queues may be the same.

As another example, in response to the commands transmitted to the input and output client interfaces 532 and 542 being different from each other, different command queues may be transmitted to the input and output client interfaces 532 and 542.

Subsequently, the input and output client interfaces 532 and 542 may access the shared memory 508 based on the received key data (S5), and may copy or read the shared data from the shared memory 508 (S7).

Particularly, in response to the input and output client interfaces 532 and 542 receiving the same shared data, the input and output client interfaces 532 and 542 may access the shared memory 508 based on the same command queues and the same key data (S5), and may copy or read the shared data from the shared memory 508.

Consequently, the second virtual machine 530 and the third virtual machine 540 may access the shared memory 508, and may eventually share the shared data.

For example, in the case in which the shared data are image data, the second virtual machine 530 and the third virtual machine 540 may share the image data, and eventually the plurality of displays 180a and 180b in the vehicle may display the same shared images in a synchronized state.

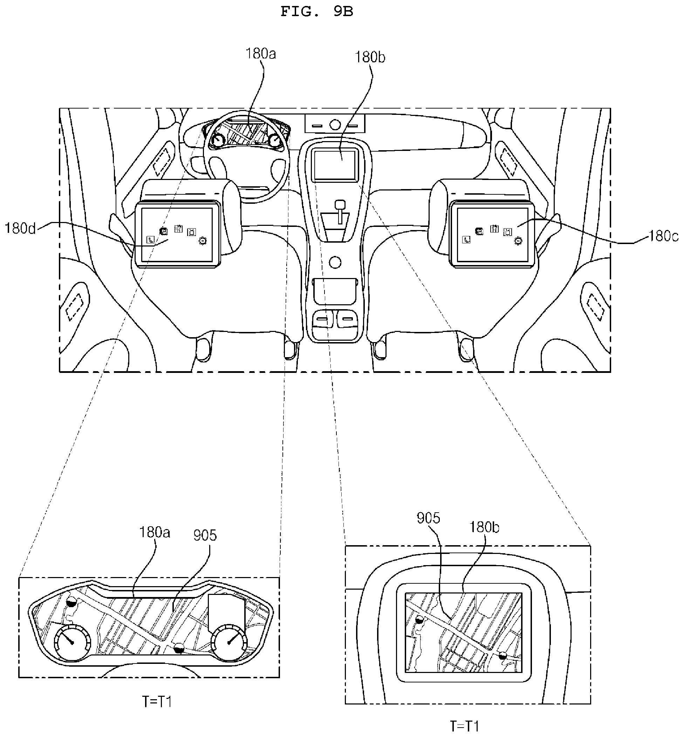

FIG. 9B illustrates that, by the system 500 of FIG. 9A, the second virtual machine 530 displays image data received through the shared memory 508 on the first display 180a, and the third virtual machine 540 displays image data received through the shared memory 508 on the second display 180b.

FIG. 9B illustrates that an image 905a displayed on the first display 180a and an image 905b displayed on the second display 180b are synchronized, whereby the same images 905a and 905b are displayed at the time of T1.

That is, image data processed by the first virtual machine 520 in the processor 175 are transmitted to the second virtual machine 530 and the third virtual machine 540 through the shared memory 508, and the first image 905a displayed on the first display 180a and the second image 905b displayed on the second display 180b based on the image data may be the same. Consequently, the plurality of displays 180a and 180b in the vehicle may display the same images in a synchronized state.

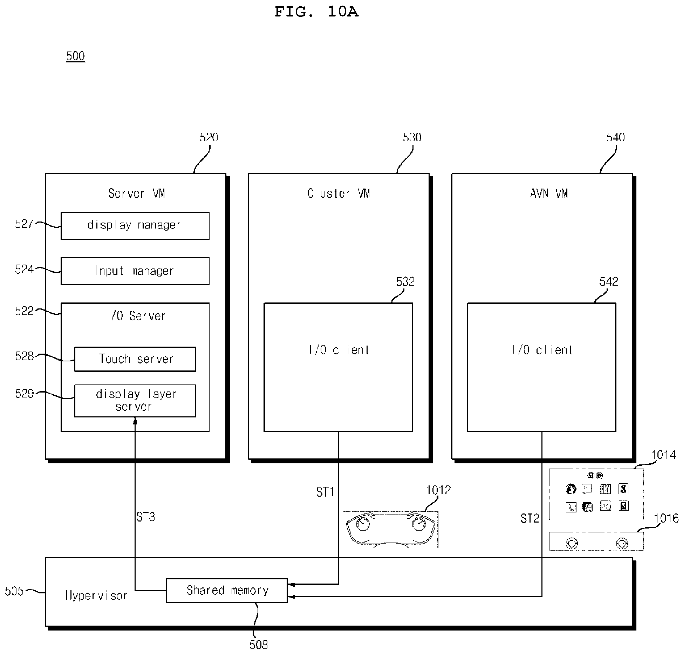

FIGS. 10A to 13D are views referred to in the description of FIGS. 5 to 7.

First, FIG. 10A illustrates that the second virtual machine 530 and the third virtual machine 540 generate overlays and transmit the generated overlays to the first virtual machine 520 through the input and output client interfaces 532 and 542, respectively.

The second virtual machine 530 may generate a first overlay 1012, which is a physical overlay. Specifically, a window manager 537 in the second virtual machine 530 may generate a first overlay 1012, which is a physical overlay.

The input and output client interface 532 in the second virtual machine 530 may write the first overlay 1012 in the shared memory 508 (ST1), and the first virtual machine 520 may receive the first overlay 1012 written in the shared memory 508 using the received buffer index (ST3).

The third virtual machine 540 may generate a second overlay 1014 and a third overlay 1016, which are physical overlays. Specifically, a window manager 547 in the third virtual machine 540 may generate a second overlay 1014 and a third overlay 1016, which are physical overlays.

The input and output client interface 542 in the third virtual machine 540 may write the second overlay 1014 and the third overlay 1016 in the shared memory 508 (ST2), and the first virtual machine 520 may receive the second overlay 1014 and the third overlay 1016 written in the shared memory 508 using the received buffer index (ST3).

Meanwhile, vehicle speed information displayed in the first overlay 1012 may be based on sensor data from the sensor device 760 in the vehicle 100, received by the first interface 521 in the first virtual machine 520.

For example, the first virtual machine 520 may receive and process wheel speed sensor data of the vehicle 100 through the first interface 521, and may transmit the processed wheel speed sensor data or speed information corresponding to the processed wheel speed sensor data to the second virtual machine 530 through the input and output server interface 522.

Consequently, the second virtual machine 530 may generate the first overlay 1012 based on the vehicle speed information.

Meanwhile, in-vehicle temperature information displayed in the third overlay 1016 may be based on sensor data from the sensor device 760 in the vehicle 100, received by the first interface 521 in the first virtual machine 520.

For example, the first virtual machine 520 may receive and process air conditioning data of the vehicle 100 through the first interface 521, and may transmit the processed air conditioning data or in-vehicle temperature information corresponding to the processed air conditioning data to the third virtual machine 540 through the input and output server interface 522.

Consequently, the third virtual machine 540 may generate the third overlay 1016 based on the in-vehicle temperature information.

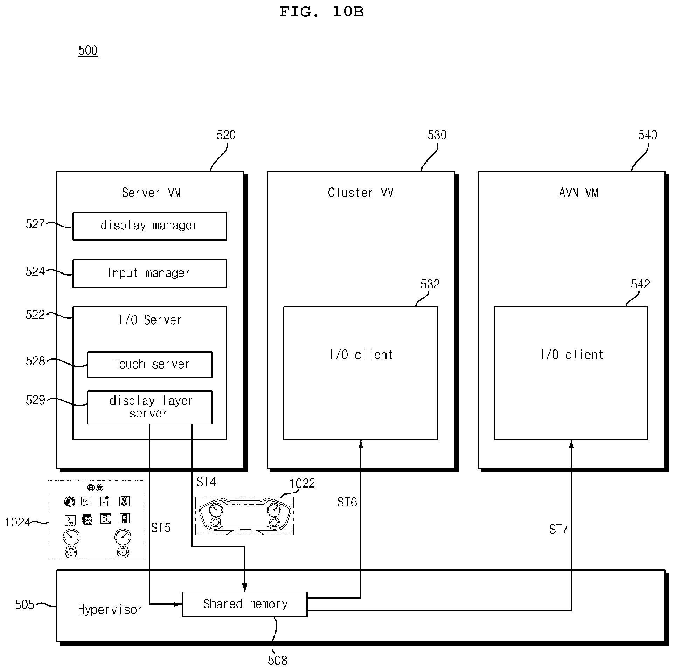

FIG. 10B illustrates that a composite overlay generated by the first virtual machine 520 is transmitted to the second virtual machine 530 and the third virtual machine 540.

Referring to the figure, the first virtual machine 520 may generate a first composite overlay 1022 using the received first overlay 1012 and third overlay 1016.

Specifically, the display manager 527 or the display layer server 529 in the first virtual machine 520 may generate a first composite overlay 1022 using the received first overlay 1012 and third overlay 1016.

The input and output server interface 522 in the first virtual machine 520 may write the first composite overlay 1022 in the shared memory 508 (ST4), and the second virtual machine 530 may receive the first composite overlay 1022 written in the shared memory 508 using the received buffer index (ST6).

The first virtual machine 520 may generate a second composite overlay 1024 using the received first to third overlays 1012, 1014, and 1016.

Specifically, the display manager 527 or the display layer server 529 in the first virtual machine 520 may generate a second composite overlay 1024 using the received first to third overlays 1012, 1014, and 1016.

The input and output server interface 522 in the first virtual machine 520 may write the second composite overlay 1024 in the shared memory 508 (ST5), and the third virtual machine 540 may receive the second composite overlay 1024 written in the shared memory 508 using the received buffer index (ST7).

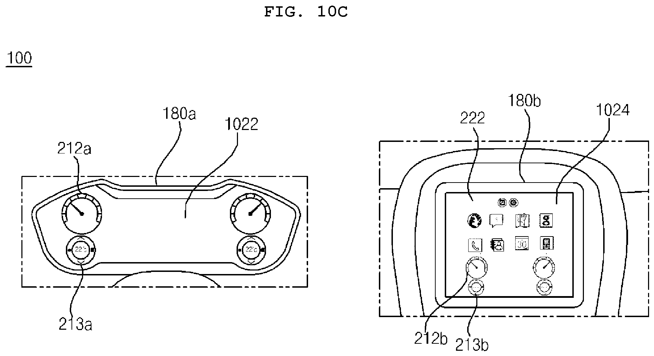

FIG. 10C is a view showing the first composite overlay 1022 and the second composite overlay 1024.

The first composite overlay 1022 may be displayed on the first display 180a, and a vehicle speed indicator 212a and an in-vehicle temperature indicator 213a may be displayed in the first composite overlay 1022.

The second composite overlay 1024 may be displayed on the second display 180b, and a plurality of applications, a vehicle speed indicator 212b, and an in-vehicle temperature indicator 213b may be displayed in the second composite overlay 1024.

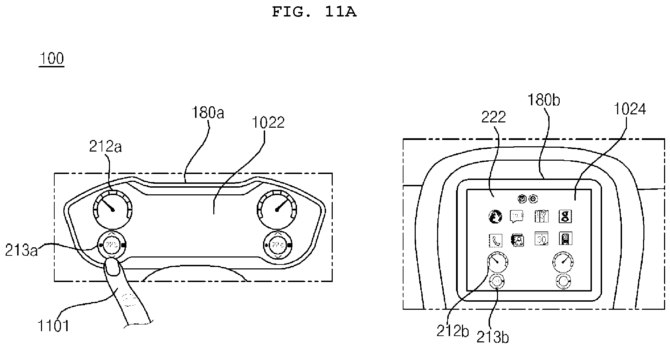

FIG. 11A illustrates that touch input 1101 is performed to the in-vehicle temperature indicator 213a in the first composite overlay 1022 in the state in which the first composite overlay 1022 is displayed on the first display 180a and the second composite overlay 1024 is displayed on the second display 180b.

In the embodiment of the present disclosure, in order to rapidly process the touch input, a physical device driver is provided only in the first virtual machine 520 and is not provided in the second virtual machine 530 and the third virtual machine 540.

Consequently, the touch input 1101 to the first display 180a is transmitted to the first virtual machine 520, not the second virtual machine 530.

Meanwhile, in response to the touch input 1101 corresponding to the overlay provided by the third virtual machine 540, among a plurality of overlays displayed on the second display 180b, the first virtual machine 520 may transmit information regarding the touch input to the third virtual machine 540.

To this end, the first virtual machine 520 may extract coordinate information of the touch input 1101.

Meanwhile, the first virtual machine 520 may be configured to store the coordinate information of the touch input 1101 in the shared memory 508. Consequently, the touch input may be rapidly and accurately processed.

Meanwhile, the first virtual machine 520 may transmit a buffer index regarding the shared memory 508 to the second virtual machine 530 or the third virtual machine 540, and the second virtual machine 530 or the third virtual machine 540 may read the coordinate information of the touch input written in the shared memory 508 based on the received buffer index.

Specifically, the input and output server interface 522 in the first virtual machine 520 may be configured to store the coordinate information of the touch input in the shared memory 508, and the input and output client interface 532 or 542 in the second virtual machine 530 or the third virtual machine 540 may read the coordinate information of the touch input written in the shared memory 508. Consequently, the touch input may be rapidly and accurately processed.

In FIG. 11A, since the touch input 1101 corresponds to the overlay provided by the third virtual machine 540, among the plurality of overlays displayed on the second display 180b, the first virtual machine 520 may write the coordinate information of the touch input in the shared memory 508, and the third virtual machine 540 may read the coordinate information of the touch input written in the shared memory 508 based on the received buffer index.

Meanwhile, in response to information regarding the touch input corresponding to at least one overlay from the third virtual machine 540, the first virtual machine 520 may be configured to transmit the information regarding the touch input to the third virtual machine 540, and the third virtual machine 540 may be configured to change at least one overlay based on the touch input and the changed overlay is displayed on the second display 180b. Consequently, the changed overlay corresponding to the touch input may be rapidly and accurately displayed.

Meanwhile, the third virtual machine 540 may transmit the changed overlay to the first virtual machine 520, and the first virtual machine 520 may be configured to transmit the changed overlay to the second virtual machine 530. Consequently, the changed overlay corresponding to the touch input may be rapidly and accurately displayed.

Meanwhile, in response to information regarding the touch input corresponding to at least one overlay from the third virtual machine 540 while corresponding to the operation of a hardware device in the vehicle, the first virtual machine 520 may be configured to transmit the information regarding the touch input to the third virtual machine 540, and may be configured to operate the hardware device in the vehicle based on the touch input. Consequently, the operation of the hardware device corresponding to the touch input may be rapidly and accurately performed.

Meanwhile, in response to information regarding the touch input corresponding to the overlay from the second virtual machine 530, the first virtual machine 520 may be configured to transmit the information regarding the touch input to the second virtual machine 530, and the second virtual machine 530 may be configured to change the overlay based on the touch input and the changed overlay is displayed on the second display 180b. Consequently, the changed overlay corresponding to the touch input may be rapidly and accurately displayed.

Meanwhile, the second virtual machine 530 may transmit the changed overlay to the first virtual machine 520, and the first virtual machine 520 may be configured to transmit the changed overlay to the third virtual machine 540. Consequently, the changed overlay corresponding to the touch input may be rapidly and accurately displayed.

Meanwhile, the processor 175 may further execute the fourth virtual machine 550 operated for the third display 180c on the hypervisor 505 in the processor 175, and the first virtual machine 520 in the processor 175 may receive touch input to any one of the first display 180a to third display 180c and may transmit information regarding the received touch input to any one of the second virtual machine 530 to the fourth virtual machine 550. Consequently, the touch input may be rapidly and accurately processed.

Meanwhile, the first virtual machine 520 may receive and process wheel speed sensor data of the vehicle 100, and may transmit an overlay indicating the processed wheel speed sensor data or speed information corresponding to the processed wheel speed sensor data to at least one of the second virtual machine 530 or the third virtual machine 540. Consequently, the wheel speed sensor data of the vehicle may be shared by at least one virtual machine.

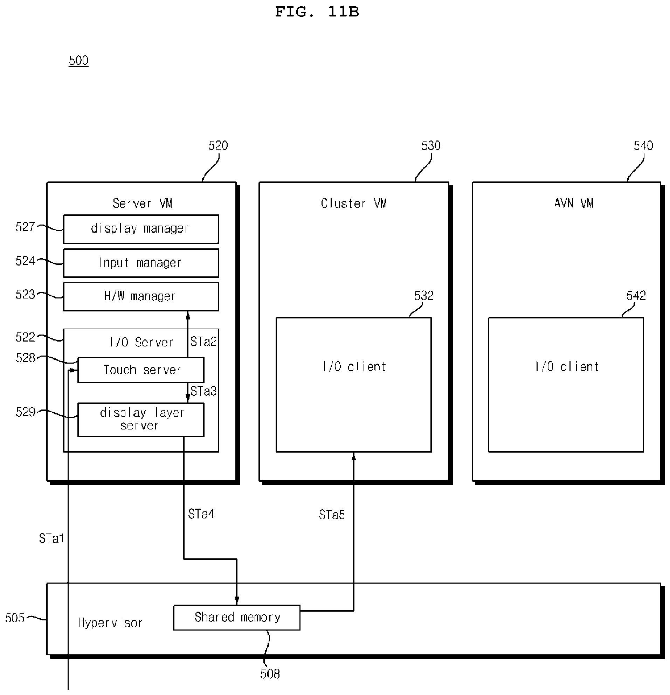

FIG. 11B is a view describing signal processing for the touch input of FIG. 11A.

Referring to the figure, the input and output server interface 522 in the first virtual machine 520 receives the touch input through the physical device driver for touch input reception.

Specifically, the touch input is transmitted to the touch server 528 in the input and output server interface 522 in the first virtual machine 520 (STa1).

Subsequently, the touch server 528 transmits the touch input to the display manager 527 and a hardware manager 523 (STa2).

The hardware manager 523 may control an air conditioner in the vehicle such that the temperature becomes 21°C, which is lower than the current temperature, 22°C, since the touch input is an input corresponding to temperature decrease in the in-vehicle temperature indicator 213a.

Meanwhile, the display manager 527 may perform control such that temperature information of 21°C, which is lower than the current temperature, 22°C, is displayed in the in-vehicle temperature indicator 213a.

Consequently, the display manager 527 or the display layer server 529 may generate an in-vehicle temperature indicator having changed temperature information (STa3).

The input and output server interface 522 in the first virtual machine 520 may write a first composite overlay including the in-vehicle temperature indicator having changed temperature information in the shared memory 508 (STa4), and the second virtual machine 530 may receive the first composite overlay written in the shared memory 508 using the received buffer index (STa5).

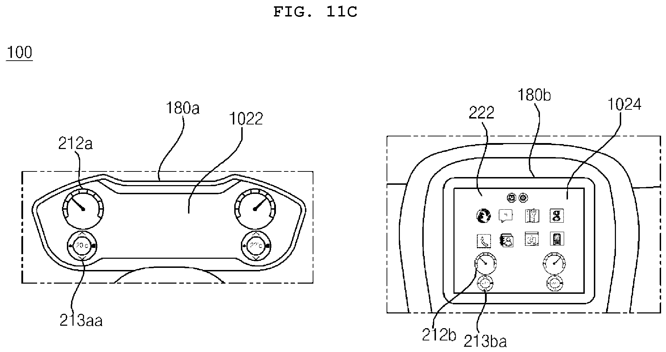

As shown in FIG. 11C, therefore, the first composite overlay 1022 having changed temperature information may be displayed on the first display 180a.

Meanwhile, the first virtual machine 520 may change temperature information in a second composite overlay in response to the change of the temperature information of the first composite overlay.

The first virtual machine 520 may write the second composite overlay having changed temperature information in the shared memory 508 (STa4), and the third virtual machine 540 may receive the second composite overlay written in the shared memory 508 using the received buffer index.

As shown in FIG. 11C, therefore, the second composite overlay 1024 having changed temperature information may be displayed on the second display 180b.

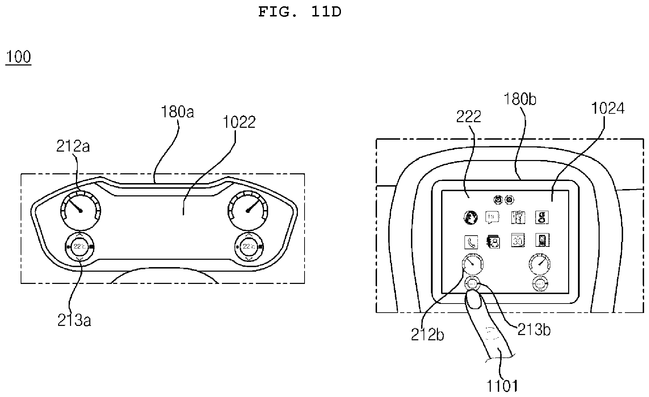

FIG. 11D illustrates that touch input 1101 is performed to the in-vehicle temperature indicator 213b in the second display 180b in the state in which the first composite overlay 1022 is displayed on the first display 180a and the second composite overlay 1024 is displayed on the second display 180b, unlike FIG. 11A.

In the embodiment of the present disclosure, in order to rapidly process the touch input, a physical device driver is provided only in the first virtual machine 520 and is not provided in the second virtual machine 530 and the third virtual machine 540.

Consequently, the touch input 1101 to the first display 180a is transmitted to the first virtual machine 520, not the third virtual machine 540.

Specifically, the touch input is transmitted to the touch server 528 in the input and output server interface 522 in the first virtual machine 520.

Subsequently, the touch server 528 transmits the touch input to the display manager 527 and the hardware manager 523.

The hardware manager 523 may control the air conditioner in the vehicle such that the temperature becomes 21°C, which is lower than the current temperature, 22°C, since the touch input is an input corresponding to temperature decrease in the in-vehicle temperature indicator 213b.

Meanwhile, the display manager 527 may perform control such that temperature information of 21°C, which is lower than the current temperature, 22°C, is displayed in the in-vehicle temperature indicator 213b.

Consequently, the display manager 527 or the display layer server 529 may generate an in-vehicle temperature indicator having changed temperature information.

The input and output server interface 522 in the first virtual machine 520 may write a second composite overlay including the in-vehicle temperature indicator having changed temperature information in the shared memory 508 (STa4), and the third virtual machine 540 may receive the second composite overlay written in the shared memory 508 using the received buffer index.

As shown in FIG. 11D, therefore, the first composite overlay 1022 having changed temperature information may be displayed on the second display 180b.

In addition, the first composite overlay 1022 having changed temperature information may be displayed on the first display 180a.

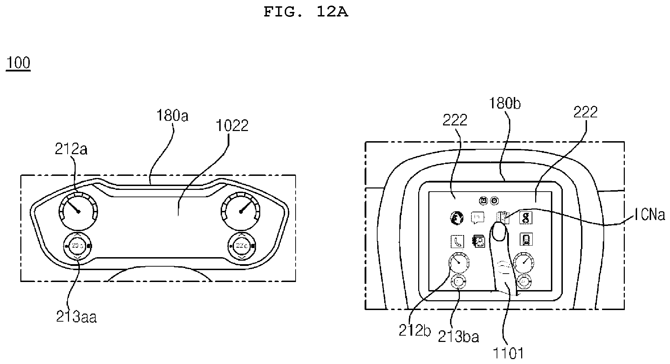

FIG. 12A illustrates that touch input 1101 is performed to a map application ICNa, among the plurality of applications in the second display 180b, in the state in which the first composite overlay 1022 is displayed on the first display 180a and the second composite overlay 1024 is displayed on the second display 180b, unlike FIG. 11A.

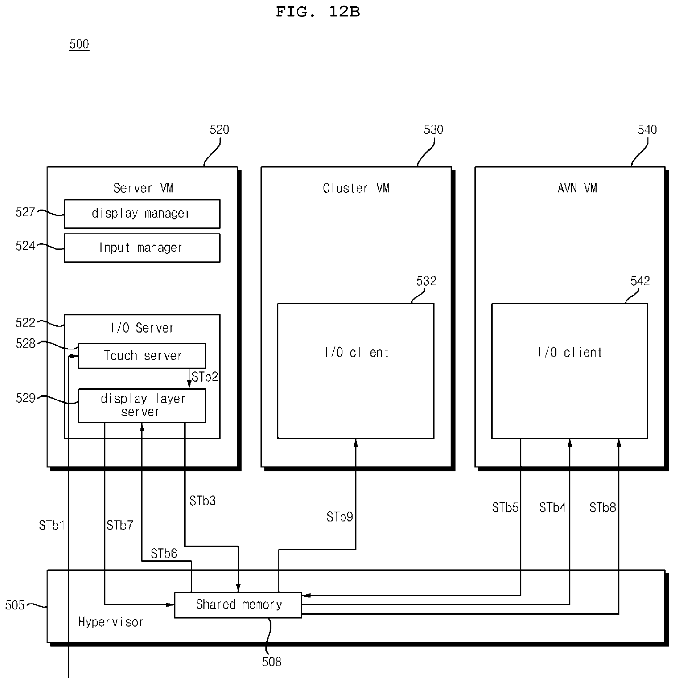

FIG. 12B is a view describing signal processing for the touch input of FIG. 12A.

Referring to the figure, the input and output server interface 522 in the first virtual machine 520 receives the touch input through the physical device driver for touch input reception.

Specifically, the touch input is transmitted to the touch server 528 in the input and output server interface 522 in the first virtual machine 520 (STb1).

Subsequently, the touch server 528 transmits the touch input to the display manager 527 and the display layer server 529 (STb2).

Alternatively, the touch server 528 may extract coordinate information of the touch input, and may transmit the extracted coordinate information of the touch input to the display manager 527 and the display layer server 529 (STb2).

The display manager 527 or the display layer server 529 may be configured to execute the map application ICNa, since the touch input corresponds to execution input of the map application ICNa.

Consequently, the input and output server interface 522 in the first virtual machine 520 may write a request for execution of the map application ICNa or the coordinate information of the touch input in the shared memory 508 (STb3), and the third virtual machine 540 may read the request for execution of the map application ICNa or the coordinate information of the touch input written in the shared memory 508 using the received buffer index (STb4).

The third virtual machine 540 may execute the map application ICNa according to the received request for execution of the map application ICNa or the received coordinate information of the touch input, and may generate a map layer.

The input and output client interface 542 in the third virtual machine 540 may write the map layer in the shared memory 508 (STb5), and the first virtual machine 520 may receive the map layer written in the shared memory 508 using the received buffer index (STb6).

The input and output server interface 522 in the first virtual machine 520 may generate a second composite overlay including the map layer and the vehicle speed indicator.

The input and output server interface 522 in the first virtual machine 520 may write the second composite overlay including the map layer and the vehicle speed indicator in the shared memory 508 (STb7), and the third virtual machine 540 may receive the second composite overlay written in the shared memory 508 using the received buffer index (STb8).

The third virtual machine 540 may be configured to display the second composite overlay including the map layer and the vehicle speed indicator on the second display 180b. Consequently, the touch input may be rapidly and accurately processed.

In addition, the input and output server interface 522 in the first virtual machine 520 may generate a first composite overlay including the map layer and the vehicle speed indicator.

The input and output server interface 522 in the first virtual machine 520 may write the first composite overlay including the map layer and the vehicle speed indicator in the shared memory 508, and the second virtual machine 530 may receive the first composite overlay written in the shared memory 508 using the received buffer index (STb9).

The second virtual machine 530 may be configured to display the first composite overlay including the map layer and the vehicle speed indicator on the first display 180a.

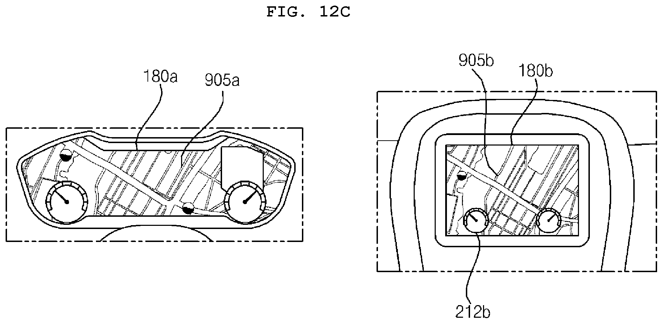

FIG. 12C illustrates that a first composite overlay 905a including the map layer and the vehicle speed indicator is displayed on the first display 180a and a second composite overlay 905b including the map layer and the vehicle speed indicator is displayed on the second display 180b as the result of execution of the map application ICNa.

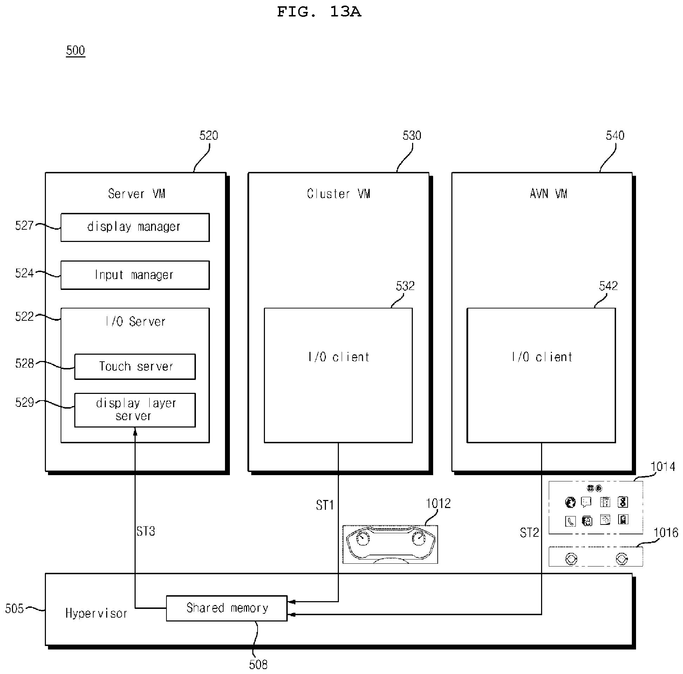

Next, FIG. 13A illustrates that the second virtual machine 530 and the third virtual machine 540 generate overlays and transmit the generated overlays to the first virtual machine 520 through the input and output client interfaces 532 and 542, respectively, like FIG. 10A.

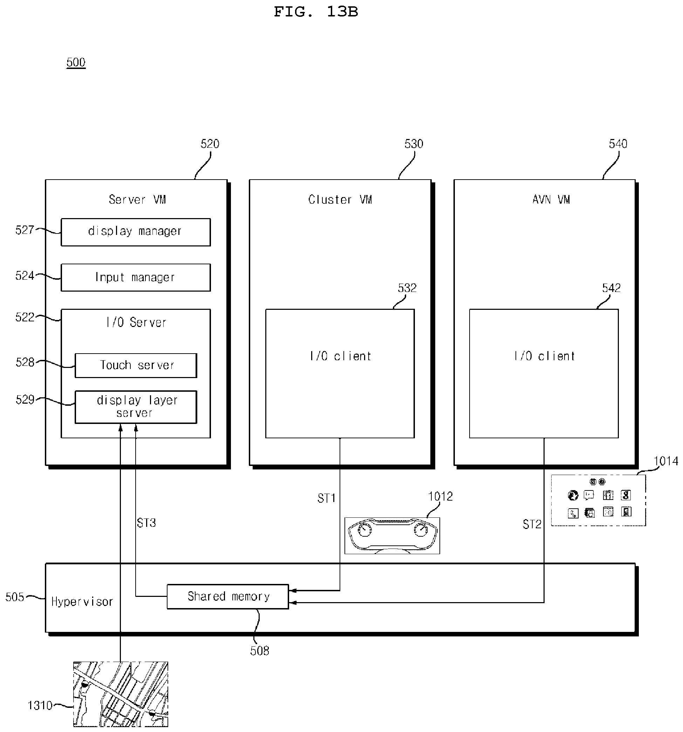

Next, FIG. 13B illustrates that a map overlay 1310 is received by the first virtual machine 520 through an external storage device or a communication device.

The first interface 521 in the first virtual machine 520 may receive the map overlay 1310 through the external storage device or the communication device.

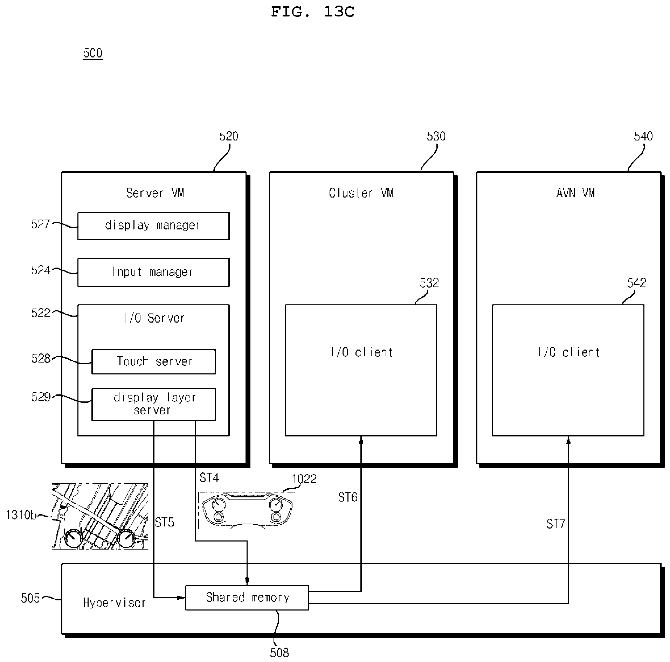

Next, FIG. 13C illustrates that the first virtual machine 520 transmits a map overlay 1310b to the outside.

Referring to the figure, the first virtual machine 520 may generate a map overlay 1310b including vehicle speed information based on the map overlay 1310 and the wheel speed sensor data of the vehicle 100.

For example, the display layer server 529 in the first virtual machine 520 may generate a map overlay 1310b including vehicle speed information.

The display layer server 529 in the first virtual machine 520 may transmit the generated map overlay 1310b including vehicle speed information to the outside.

Meanwhile, the first virtual machine 520 may generate a first composite overlay 1022 using the received first overlay 1012 and third overlay 1016.

Specifically, the display manager 527 or the display layer server 529 in the first virtual machine 520 may generate a first composite overlay 1022 using the received first overlay 1012 and third overlay 1016.

The input and output server interface 522 in the first virtual machine 520 may write the first composite overlay 1022 in the shared memory 508 (ST4), and the second virtual machine 530 may receive the first composite overlay 1022 written in the shared memory 508 using the received buffer index (ST6).

Meanwhile, the input and output server interface 522 in the first virtual machine 520 may write the map overlay 1310b including vehicle speed information in the shared memory 508 (ST5), and the third virtual machine 540 may receive the map overlay 1310b including vehicle speed information written in the shared memory 508 using the received buffer index (ST7).

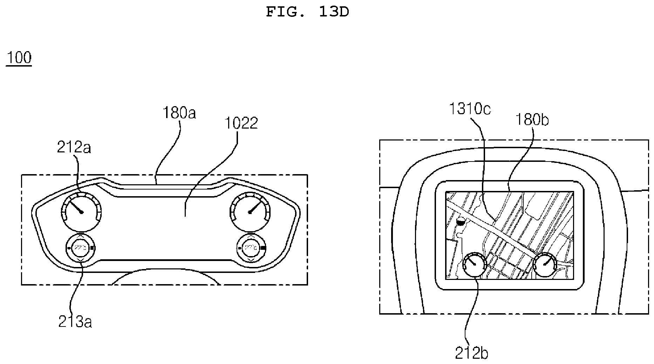

FIG. 13D illustrates the first composite overlay 1022 and the map overlay 1310b including vehicle speed information.

The first composite overlay 1022 may be displayed on the first display 180a, and a vehicle speed indicator 212a and an in-vehicle temperature indicator 213a may be displayed in the first composite overlay 1022.

The map overlay 1310b including vehicle speed information may be displayed on the second display 180b, and a map and a vehicle speed indicator 212b may be displayed in the map overlay 1310b.

In the embodiment of the present disclosure, in order to rapidly process sensor data, a physical device driver is provided only in the first virtual machine 520 and is not provided in the second virtual machine 530 and the third virtual machine 540.

Meanwhile, a signal processing device according to another embodiment of the present disclosure includes a processor 175 configured to perform signal processing for a display located in a vehicle 100, wherein the processor 175 executes a first virtual machine 520 to a third virtual machine 540 on a hypervisor in the processor 175, the second virtual machine 530 is operated for a first display 180a, the third virtual machine 540 is operated for a second display 180b, and the first virtual machine 520 in the processor 175 includes a first interface 521 configured to receive CAN communication data and a radio signal from a tuner 105 in the vehicle 100 and an input and output server interface 522 configured to transmit data corresponding to the CAN communication data and the radio signal received from the first interface 521 to at least one of the second virtual machine 530 or the third virtual machine 540. Consequently, the CAN communication data may be rapidly received and processed. In particular, the CAN communication data may be rapidly shared even though the number of virtual machines is increased or the number of displays is increased. Furthermore, the CAN communication data may be rapidly shared even though operating systems of the plurality of virtual machines are different from each other.

Meanwhile, the first virtual machine 520 may receive and process wheel speed sensor data of the vehicle 100 included in the CAN communication data, and may transmit the processed wheel speed sensor data or speed information corresponding to the processed wheel speed sensor data to at least one of the second virtual machine 530 or the third virtual machine 540. Consequently, the wheel speed sensor data of the vehicle 100 may be rapidly received and processed.

It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A signal processing device comprising a processor configured to perform signal processing for a display located in a vehicle, wherein
the processor executes first to third virtual machines on a hypervisor in the processor,
the second virtual machine is operated for a first display,
the third virtual machine is operated for a second display, and
the first virtual machine in the processor comprises:
a first interface configured to receive sensor data from a sensor device in the vehicle and a radio signal from a tuner in the vehicle; and
an input and output server interface configured to transmit data corresponding to the sensor data or the radio signal received from the first interface to at least one of the second virtual machine or the third virtual machine.

2. The signal processing device of claim 1, wherein the second virtual machine and the third virtual machine comprise input and output client interfaces configured to receive the data corresponding to the sensor data or the radio signal from the first interface in the first virtual machine.

3. The signal processing device of claim 1, wherein the second virtual machine and the third virtual machine do not perform data communication with the sensor device in the vehicle and the tuner in the vehicle.

4. The signal processing device of claim 1, wherein
the first virtual machine is configured to store the data corresponding to the sensor data or the radio signal in a shared memory, and
at least one of the second virtual machine or the third virtual machine receives the data corresponding to the sensor data or the radio signal stored in the shared memory.

5. The signal processing device of claim 4, wherein
the first virtual machine transmits a buffer index regarding the shared memory, in which the data corresponding to the sensor data or the radio signal are stored, to the second virtual machine or the third virtual machine, and
the second virtual machine or the third virtual machine reads the data corresponding to the sensor data or the radio signal stored in the shared memory based on the received buffer index.

6. The signal processing device of claim 1, wherein the first virtual machine receives and processes wheel speed sensor data of the vehicle through the first interface, and transmits the processed wheel speed sensor data or speed information corresponding to the processed wheel speed sensor data to at least one of the second virtual machine or the third virtual machine through the input and output server interface.

7. The signal processing device of claim 1, wherein the first virtual machine receives and processes air conditioning data of the vehicle through the first interface, and transmits the processed air conditioning data or in-vehicle temperature information corresponding to the processed air conditioning data to at least one of the second virtual machine or the third virtual machine through the input and output server interface.

8. The signal processing device of claim 1, wherein the first virtual machine performs a supervisory service for system and display management and a system service for external device connection control and vehicle information management.

9. The signal processing device of claim 1, wherein
the sensor data from the sensor device in the vehicle are received based on CAN communication, and
the first interface in the first virtual machine in the processor further receives USB data or Bluetooth communication data.

10. The signal processing device of claim 1, wherein the first virtual machine receives touch input to the first display or the second display, and transmits information regarding the touch input to the second virtual machine or the third virtual machine.

11. The signal processing device of claim 10, wherein the touch input is not input to the second virtual machine and the third virtual machine.

12. The signal processing device of claim 10, wherein the information regarding the touch input comprises coordinate information of the touch input.

13. The signal processing device of claim 10, wherein, in response to the touch input corresponding to an overlay provided by the third virtual machine, among a plurality of overlays displayed on the first display, the first virtual machine in the processor does not transmit the information regarding the touch input to the second virtual machine and transmits the information regarding the touch input to the third virtual machine.

14. The signal processing device of claim 10, wherein, in response to the touch input corresponding to an overlay provided by the second virtual machine, among a plurality of overlays displayed on the first display, the first virtual machine in the processor transmits the information regarding the touch input to the second virtual machine.

15. The signal processing device of claim 10, wherein the first virtual machine in the processor is configured to store the coordinate information of the touch input in a shared memory.

16. The signal processing device of claim 15, wherein
the first virtual machine transmits a buffer index regarding the shared memory to the second virtual machine or the third virtual machine, and
the second virtual machine or the third virtual machine reads the coordinate information of the touch input written in the shared memory based on the received buffer index.

17. The signal processing device of claim 1, wherein
the input and output server interface in the first virtual machine receives requests for transmission of the same data from input and output client interfaces in the second virtual machine and the third virtual machine and transmits a request for allocation of a shared memory to a security manager, and
the security manager allocates the shared memory using the hypervisor and writes shared data in the shared memory.

18. A signal processing device comprising a processor configured to perform signal processing for a display located in a vehicle, wherein
the processor executes first to third virtual machines on a hypervisor in the processor,
the second virtual machine is operated for a first display,
the third virtual machine is operated for a second display, and
the first virtual machine in the processor comprises:
a first interface configured to receive CAN communication data and a radio signal from a tuner in the vehicle; and
an input and output server interface configured to transmit data corresponding to the CAN communication data or the radio signal received from the first interface to at least one of the second virtual machine or the third virtual machine.

19. The signal processing device of claim 18, wherein the first virtual machine receives and processes wheel speed sensor data of the vehicle included in the CAN communication data, and transmits the processed wheel speed sensor data or speed information corresponding to the processed wheel speed sensor data to at least one of the second virtual machine or the third virtual machine.

20. A display apparatus for vehicle, the display apparatus comprising:
a first display;
a second display; and
a signal processing device comprising a processor configured to perform signal processing for the first display and the second display, wherein
the signal processing device comprises the signal processing device of any one of claims 1 to 19.
